# EUROPÄISCHE PATENTSCHRIFT

(11) **EP 2 003 730 B1**
(45) Veröffentlichungstag und Bekanntmachung des Hinweises auf die Patenterteilung: **01.12.2010**
(21) Anmeldenummer: 08153087.5
(22) Anmeldetag: 20.03.2008
(51) Int. Cl.: H01Q 13/02, H01Q 17/00, H01Q 1/22, G01F 23/284

(54) **Antenne für ein Füllstandsradar für Hochtemperatur- und/oder Hochdruckanwendung**
Aerial for a fill state radar for use in high temperature and/or high pressure environments
Antenne pour un radar de niveau de remplissage pour application à haute température et/ou haute pression

(30) Priorität: 06.06.2007 DE 102007026389; 06.06.2007 US 942273 P
(43) Veröffentlichungstag der Anmeldung: 17.12.2008
(73) Patentinhaber: VEGA Grieshaber KG, 77709 Wolfach (DE)
(72) Erfinder: Kienzle, Klaus, 77736 Zell am Harmersbach (DE); Fehrenbach, Josef, 77716 Haslach (DE); Deck, Thomas, 77709 Wolfach (DE); Schultheiß, Daniel, 78132 Hornberg (DE); Motzer, Jürgen, 77723 Gengenbach (DE)
(74) Vertreter: Kopf, Korbinian Paul

(56) Entgegenhaltungen:
- WO-A-02/42793
- DE-A1- 3 818 114
- DE-A1- 4 336 494
- GB-A- 1 064 130
- US-A1- 2002 053 238
- US-A1- 2006 071 848
- US-B1- 6 276 199

## Beschreibung

### Technisches Gebiet:

Die vorliegende Erfindung betrifft Füllstandsmessung. Insbesondere betrifft die vorliegende Erfindung eine Antenne für ein Füllstandsradar zum Massen eines Füllstands in einem Tank, ein mit einer Antenne, sowie die Verwendung einer Antenne zur Füllstandsmessung.

### Hintergrund der Erfindung:

Im C-Band (6,3 GHz) tritt bei der Verwendung von Keramikantennensystemen sog. Klingeln im Nahbereich des Antennensystems auf. Bei diesem Klingeln handelt es sich um langsam abfallende "Ripples" nach der Antenneneinkopplung in Richtung der Zeit- bzw. Distanzachse. Im C-Band ist das Klingeln relativ stark ausgeprägt. Auch im sog. K-Band (26 GHz) oder bei höheren oder niedrigeren Frequenzen tritt ein solches Klingeln auf.

Das erhöhte Klingeln ist systembedingt und wird hauptsächlich durch den Übergang von Luft in Keramik verursacht. An den Übergangsstellen (Keramik - Luft bzw. Luft - Keramik) wird durch den großen Sprung der Dielektrizitätskonstante ein Teil der elektromagnetischen Wellen zurückreflektiert. Von dem Teil, der in die Keramik eindringt, wird wieder ein Teil am nächsten Übergang reflektiert, usw. Da das Keramikmaterial nur wenig dämpft, dauert es verhältnismäßig lange, bis sich die Wellen in dem System "totgelaufen" haben. Dieser Effekt wird in dem sog. Antennenklingeln sichtbar.

Bei Anwendungen bei Temperaturen von über 200°C oder bei Anwendungen mit hohem Druck kann kein Antennensystem wie sonst üblich mit einer Prozesstrennung aus Polytetrafluoroethylen (PTFE) eingesetzt werden, denn diese würde durch die hohe Temperatur oder durch den hohen Druck zerstört werden. Bei diesen Anwendungen wird die Prozesstrennung nach dem heutigen Stand der Technik auf Keramikbasis (z. B. Aluminiumoxid (Al₂O₃), Dielektrizitätskonstante (DK-Wert) ca. 9,9) realisiert, was ein deutlich erhöhtes Klingeln im Nahbereich zur Folge haben kann. Nahbereich bedeutet in diesem Fall bis zu 10 m, je nach Antennensystem und verwendeter Frequenz.

Durch das hohe Klingeln kann bei manchen Anwendungen im Nahbereich nicht oder nur unzureichend genau gemessen werden. Bei Medien mit niedrigerer Dielektrizitätskonstante kann oft gar nicht mehr gemessen werden.

Da dieses erhöhte Antennenklingeln größtenteils konstruktionsbedingt und somit nicht vermeidbar ist, muss es durch entsprechende Maßnahmen "gedämpft" werden.

WO 2002/42793 A1 beschreibt ein TDR Füllstandsmessgerät mit einem Leitelement, das an einer Ausleitstelle ein elektrisches Hochfrequenzsignal an eine zur Führung des Hochfrequenz-Signals dienende Sonde überträgt.

Aus DE 43 36 494 A1 ist eine Vorrichtung zur Füllstandsmessung mit einem Quarzglas und einer Dämpfungsmatte bekannt.

US 2006/0071848 A1 beschreibt ein Füllstandsmessgerät mit einem Behälterflansch mit einer Dichtung.

Aus US 2002/0053238 A1 ist ein Füllstandsmessgerät mit einem Glasfenster mit einem daran angebrachten Antennenkegel bekannt.

US 6 276 199 B1 beschreibt ein Füllstandsmessgeräte mit einer Antenne, die teilweise von einer Schutzhülse und einer weiteren Hülse ummantelt ist, wobei die Hülse dazu ausgelegt ist, um Mikrowellen zu spiegeln bzw. zu reflektieren.

### Darstellung der Erfindung:

Es ist eine Aufgabe der vorliegenden Erfindung, ein verbessertes Messsignal im Nahbereich der Antenne bereitzustellen.

Es sind eine Antenne, ein Füllstandsradar und die Verwendung einer Antenne gemäß den Merkmalen der unabhängigen Ansprüche angegeben.

Die im Folgenden beschriebenen Ausführungsbeispiele der Antenne betreffen gleichermaßen auch das Füllstandsradar und die Verwendung der Antenne zur Füllstandsmessung.

Gemäß der vorliegenden Erfindung ist eine Antenne für ein Füllstandsradar zum Messen eines Füllstands in einem Tank angegeben, wobei die Antenne eine Prozesstrennung für Hochtemperaturanwendungen oder Hochdruckanwendungen und ein Dämpfungselement zur Verbesserung eines Messsignals im Nahbereich der Antenne aufweist, wobei das Dämpfungselement an der Prozesstrennung oder in der Prozesstrennung angebracht ist.

Gemäß der vorliegenden Erfindung ist die Prozesstrennung auf Keramikbasis ausgeführt.

Gemäß einem weiteren Ausführungsbeispiel der vorliegenden Erfindung weist die Prozesstrennung ein Aluminiumoxid auf (Al₂O₃). Beispielsweise ist die Prozesstrennung komplett aus Aluminiumoxid gefertigt.

Durch die Optimierung des Keramikantennensystems durch das Aufbringen oder Einbringen von Dämpfungsmaterial kann das Klingeln auf das Niveau der gut funktionierenden PTFE-Einkopplung gebracht werden. Zwar kann dabei das Nutzecho auch etwas reduziert werden (je nach Ausführung um ca. 5 bis 10 Dezibel), trotzdem kann das Verhältnis zwischen Störsignal und Nutzsignal (S/N) im Nahbereich um bis zu 40 Dezibel verbessert werden.

### Dieser Vorgang lässt sich folgendermaßen erklären:

Das Nutzsignal, also das Signal, welches aus dem Antennensystem gesendet und dann wieder empfangen wird, durchläuft das System genau zweimal. Einmal in Vorwärtsrichtung beim Senden und einmal in Rückwärtsrichtung beim Empfangen. Das Nutzsignal läuft somit auch nur zweimal durch das angebrachte Dämpfungsmaterial und wird dadurch nur wenig gedämpft.

Der Anteil vom Nutzsignal, welcher durch die Reflexionen an den Störstellen innerhalb des Antennensystems verbleibt, wird dann als Störsignal bezeichnet. Dieses Störsignal, welches das Klingeln verursacht, durchläuft das System durch die ständigen Reflexionen mehrmals. Bei jedem Vorbeikommen am Dämpfungsmaterial wird es reduziert, bis es sich sozusagen darin "totgelaufen" hat. Mit Hilfe des angebrachten oder integrierten Dämpfungsmaterials wird dieses "Totlaufen" also deutlich beschleunigt. Nach nur wenigen Durchlaufen kann das Störsignal somit im Wesentlichen "weggedämpft" sein.

Dies wirkt sich dann so aus, dass die störenden "Ripples" hinter der Antennencinkopplung deutlich schneller abfallen.

Hierdurch wird das Messsignal im Nahbereich der Antenne verbessert, indem das störende Klingeln im Nahbereich des Antennensystems deutlich reduziert wird. Insbesondere bei Antennensystemen für Hochtemperatur- und/oder Hochdruckanwendungen (400°C, 160 bar) mit einer Prozesstrennung aus Keramik ist das störende Klingeln im Nahbereich durch die Einbringung des erfindungsgemäßen Dämpfungselements so deutlich reduziert, dass sensitive Messungen im Nahbereich teilweise erst jetzt möglich werden.

Gemäß einer ersten Option der vorliegenden Erfindung ist das Dämpfungselement als Ummantelung der Prozesstrennung ausgeführt.

Es muss sich hier nicht um eine vollständige Ummantelung handeln. Vielmehr können auch nur einzelne Bereiche der Prozesstrennung ummantelt sein.

Gemäß einem weiteren Ausführungsbeispiel der vorliegenden Erfindung weist die Prozesstrennung einen zylindrischen Bereich auf, bei dem das Dämpfungselement in dem zylindrischen Bereich der Prozesstrennung angeordnet ist.

Gemäß einem weiteren Ausführungsbeispiel der vorliegenden Erfindung weist die Prozesstrennung einen konischen Bereich auf, wobei das Dämpfungselement in dem konischen Bereich angeordnet ist.

Beispielsweise sind also entweder der konische Bereich oder der zylindrische Bereich der Prozesstrennung vollständig oder teilweise ummantelt. Beispielsweise ist es auch möglich, dass ein Teil des konischen Bereichs ummantelt ist und gleichzeitig ein Teil des zylindrischen Bereichs ummantelt ist. Oder aber es ist der gesamte konische Bereich und ein Teil des zylindrischen Bereichs ummantelt oder umgekehrt.

Die Ummantelung ist beispielsweise in Form einer Beschichtung ausgeführt.

Gemäß einem weiteren Ausführungsbeispiel der vorliegenden Erfindung weist der Tank, dessen Füllstand gemessen werden soll, einen Innenbereich auf, wobei die Prozesstrennung einen ersten Übergangsbereich zur Atmosphäre auf der Seite der Prozesstrennung aufweist, die zum Innenbereich des Tanks weist. Das Dämpfungselement ist in diesem Übergangsbereich angeordnet.

In anderen Worten befindet sich das Dämpfungselement auf der Seite der Antenne, die im eingebauten Zustand zum Tankinneren bzw. Behälterinneren bzw. in Richtung Füllgut zeigt.

Gemäß einem weiteren Ausführungsbeispiel der vorliegenden Erfindung weist der Tank einen Außenbereich auf, wobei die Prozesstrennung einen zweiten Übergangsbereich zu einer Atmosphäre auf der Seite der Prozesstrennung, die zum Außenbereich des Tanks weist, besitzt. Das Dämpfungselement ist hierbei in diesem zweiten Übergangsbereich angeordnet.

Mit anderen Worten befindet sich ein Teil oder das ganze Dämpfungselement auf der Seite der Antenne, welche mit der Strahlungsquelle und der Elektronik verbunden ist.

Gemäß einem weiteren Ausführungsbeispiel der vorliegenden Erfindung weist die Prozesstrennung einen ersten Bereich und einen zweiten Bereich auf, der von dem ersten Bereich abgeteilt bzw. getrennt ist. Das Dämpfungselement ist hierbei zwischen den beiden Bereichen angeordnet.

Beispielsweise ist das Dämpfungselement in Form einer Scheibe angeordnet, welche zwischen den beiden Bereichen der Prozesstrennung eingelegt ist.

Gemäß einem weiteren Option der vorliegenden Erfindung ist der erste Bereich mit einer Bohrung versehen, in welcher das Dämpfungselement angeordnet bzw. eingelassen ist.

Beispielsweise kann das Dämpfungselement in die Bohrung eingegossen oder eingeschoben werden.

Gemäß der vorliegenden Erfindung weist das Dämpfungselement als Dämpfungsmaterial ein Kohlenstoffmaterial auf.

Beispielsweise handelt es sich beim Kohlenstoffmaterial um E-RAM-TCG.

E-RAM-TCG ist ein Metall- und Chemikalien-freies Textilgewebe aus Carbon, das Mikrowellen in einem weiten Frequenzbereich absorbiert und zusätzlich gute Abschirmdämpfung bietet. Es wird u.a. verwendet zur Herstellung von Schutz- und Arbeitskleidung und zur Abschirmung von Räumen gegen elektromagnetische Strahlung im häuslichen, gewerblichen und industriellen Bereich. Das Material ist nicht brennbar.

Weiterhin ist es atmungsaktiv, falt- und knickbar und verlegbar in Beton und im Trockenbau.

### Die mechanischen Eigenschaften sind wie folgt:

Gewicht: 330g/qm, Dichte: 0,08 g/ccm, Reißfestigkeit: 981 N/5 cm (Kette) bzw. 343 N/5 cm (Schuss), Kohlenstoffanteil: 99,9 %, Dicke (Standard): 0,5 mm, Temperaturfestigkeit im Medium Sauerstoff 1000°C, Temperaturfestigkeit im Vakuum 3200°C.

Gemäß einem weiteren Ausführungsbeispiel der vorliegenden Erfindung ist das Kohlenstoffmaterial durch eine Behandlung mit einem Hochtemperaturklebstoff oder mit einer Natriumsilikatlösung zumindest abschnittsweise verfestigt oder geschützt.

Auch können zur zumindest abschnittsweisen Verfestigung und zum Schutz des Kohlenstoffmaterials Kaliumsilikate oder deren viskosen wässrigen Lösungen eingesetzt werden. Im Allgemeinen spricht man hier von Wasserglas (Natrium wasserglas oder Kaliumwasserglas). Die Wassergläser sind im reinen Zustand durchsichtige, farblose oder durch Spuren von Eisen bläulich bis grünlich oder auch gelblich bis braun gefärbte Gläser, die mit Wasser bei erhöhter Temperatur und Druck kolloidale klare, stark alkalisch reagierende Lösungen bilden.

Bei dem Hochtemperaturklebstoff kann es sich um einen chemisch härtenden Hochtemperatur-Kleber handeln, der wärmeleitend, beständig gegen Temperaturschocks, elektrisch isolierend, beständig gegen Öle, Lösemittel und die meisten Säuren ist und an praktisch allen sauberen Oberflächen anhaftet. Beispielsweise handelt es sich um das Produkt Omegabond 600 oder Omegabond 700 (eine Komponente) oder um den zweikomponentigen Hochtemperatur-Kleber CC der Newport Electronics GmbH.

Auf diese Weise kann beispielsweise ein Auseinandergehen (Aufspleißen) des Kohlenstoffgewebes (Karbongewebe) nach einem Zurechtschneiden verhindert werden.

Gemäß einem weiteren Ausführungsbeispiel der vorliegenden Erfindung ist das Kohlenstoffmaterial durch eine Behandlung mit einem Zement zumindest abschnittsweise verfestigt oder geschützt.

Bei dem Zement handelt es sich beispielsweise um einen Hochtemperaturzement, der Radarwellen absorbiert. Dieser Zement ist temperaturbeständig bis zu Temperaturen von über 1000°C und ist beispielsweise unter der Produktbezeichnung C-RAM 325 der Cuming Microwave Corporation erhältlich.

Auch ist es möglich, das Kohlenstoffmaterial mit Hilfe eines Käfigs aus beispielsweise Metall "einzusperren" und an der Prozesstrennung zu fixieren.

Gemäß einem weiteren Ausführungsbeispiel ist das Kohlenstoffmaterial kein Gewebe, sondern ein Feststoff.

Hier kommt zum Beispiel CFK (kohlenstofffaserverstärkter Kunststoff) in Frage. Bei diesem Material ist insbesondere darauf zu achten, dass es temperaturstabil ist. Dies ist wiederum abhängig vom verwendeten Harz. Mit Phenolharz gebunden ist das Material bis 350°C einsetzbar. (Als Vergleich: wird die Kohlenstofffaser mit Epoxidharz gebunden, ist nur ein Einsatz bis 140°C möglich, mit Cyanesther bis 280°C).

Als Feststoff ist auch CFC (Carbon Fiber reinforced Carbon) möglich. Bei diesem faserverstärkten Kohlenstoff handelt es sich um einen Verbundwerkstoff, der zu 100% aus Kohlenstoff besteht. Die Einsatztemperatur dieses Materials liegt bei über 1000°C.

Gemäß einem weiteren Ausführungsbeispiel der vorliegenden Erfindung weist das Dämpfungselement als Dämpfungsmaterial einen magnetischen Absorber auf.

Hierbei handelt es sich beispielsweise um eine dünne Ferrit-Scheibe.

Gemäß einem weiteren Ausführungsbeispiel der vorliegenden Erfindung weist der magnetische Absorber Lithium-Titan-Zink-Ferril oder Nickel-Chrom-Zink-Ferrit oder Aluminium-Holmium-Ferrit auf.

Diese Materialien weisen insbesondere die Eigenschaft auf, dass sie auch bei hohen Temperaturen von etwa 400°C ihre magnetischen Eigenschaften noch weitgehend besitzen.

Auch ist die Verwendung entsprechender anderer Materialien möglich.

Gemäß einem weiteren Ausführungsbeispiel der vorliegenden Erfindung ist die Antenne zur Anwendung bei Frequenzen von 6,3 GHz (C-Band) oder 26 GHz (K-Band) ausgeführt.

Gemäß einem weiteren Ausführungsbeispiel der vorliegenden Erfindung ist die Antenne zur Anwendung bei Frequenzen von über 26 GHz ausgeführt.

Gemäß einem weiteren Ausführungsbeispiel der vorliegenden Erfindung ist die Antenne zur Anwendung bei Temperaturen von über 400°C ausgeführt.

Weiterhin ist, gemäß einem Ausführungsbeispiel der vorliegenden Erfindung, ein Füllstandsradar mit einer oben beschriebenen Antenne angegeben.

Gemäß einem weiteren Ausführungsbeispiel der vorliegenden Erfindung ist die Verwendung einer beschriebenen Antenne zur Füllstandsmessung angegeben.

Im Folgenden werden mit Verweis auf die Figuren bevorzugte Ausführungsbeispiele der vorliegenden Erfindung beschrieben.

### Kurze Beschreibung der Zeichnungen:

Fig. 1 zeigt eine schematische Querschnittsdarstellung eines Teilbereichs einer Antenne gemäß einem Ausführungsbeispiel der vorliegenden Erfindung.

Fig. 2 zeigt eine schematische Querschnittsdarstellung eines Teilbereichs einer Antenne gemäß einem weiteren Ausführungsbeispiel der vorliegenden Erfindung.

Fig. 3 zeigt eine schematische Querschnittsdarstellung eines Teilbereichs einer Antenne gemäß einem weiteren Ausführungsbeispiel der vorliegenden Erfindung.

Fig. 4 zeigt eine schematische Querschnittsdarstellung eines Teilbereichs einer Antenne gemäß einem weiteren Ausführungsbeispiel der vorliegenden Erfindung.

Fig. 5 zeigt eine schematische Querschnittsdarstellung eines Teilbereichs einer Antenne gemäß einem weiteren Ausführungsbeispiel der vorliegenden Erfindung.

Fig. 6 zeigt eine schematische Querschnittsdarstellung eines Teilbereichs einer Antenne gemäß einem weiteren Ausführungsbeispiel der vorliegenden Erfindung.

Fig. 7 zeigt eine schematische Querschnittsdarstellung eines Teilbereichs einer Antenne gemäß einem weiteren Ausführungsbeispiel der vorliegenden Erfindung.

Fig. 8 zeigt eine schematische Querschnittsdarstellung eines Teilbereichs einer Antenne gemäß einem weiteren Ausführungsbeispiel der vorliegenden Erfindung.

Fig. 9 zeigt eine schematische Querschnittsdarstellung eines Teilbereichs einer Antenne gemäß einem weiteren Ausführungsbeispiel der vorliegenden Erfindung.

Fig. 10 zeigt eine schematische Querschnittsdarstellung eines Teilbereichs einer Antenne gemäß einem weiteren Ausführungsbeispiel der vorliegenden Erfindung.

Fig. 11 zeigt eine Hüllkurve eines Keramikantennensystems nach dem Stand der Technik und eine Hüllkurve eines Keramikantennensystems gemäß einem Ausführungsbeispiel der vorliegenden Erfindung.

Fig. 12 zeigt eine Hüllkurve eines Keramikantennensystems nach dem Stand der Technik und eine zweite Hüllkurve eines Keramikantennensystems gemäß einem Ausführungsbeispiel der vorliegenden Erfindung.

Fig. 13 zeigt einen Füllstandsradar gemäß einem Ausführungsbeispiel der vorliegenden Erfindung.

### Detaillierte Beschreibung von exemplarischen Ausführungsformen:

Die Darstellungen in den Figuren sind schematisch und nicht maßstäblich.

In der folgenden Figurenbeschreibung werden für die gleichen oder ähnlichen Elemente die gleichen Bezugsziffern verwendet.

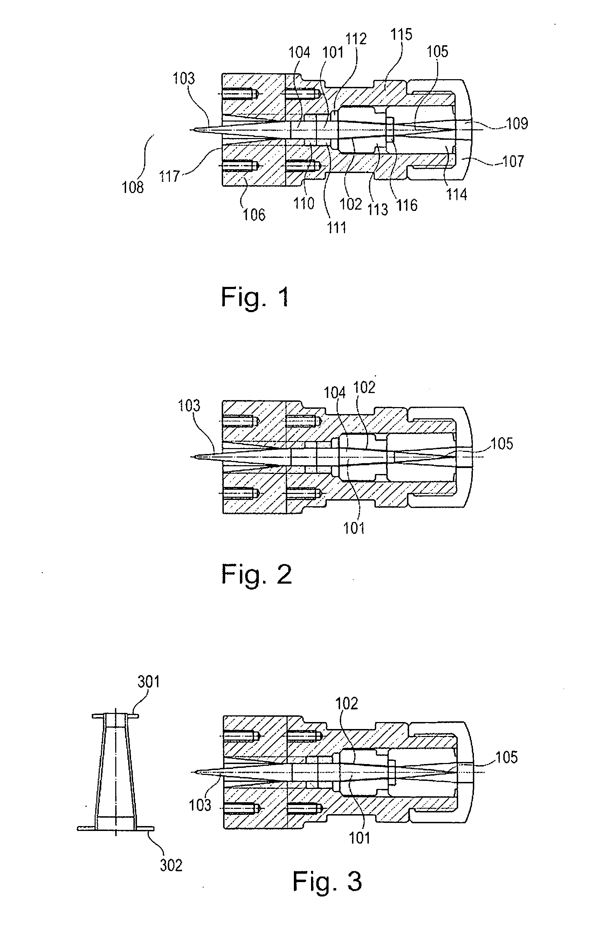

Fig. 1 zeigt eine schematische Querschnittsdarstellung eines Teilbereichs einer Antenne, bei welchem die Prozesstrennung 101 (z.B. aus Keramik) teilweise mit Dämpfungsmaterial (bzw. dem Dämpfungselement) 102 umgeben ist.

Die Prozesstrennung 101 weist hierbei einen ersten konischen Bereich 103 auf, welcher, wenn die Antenne im Tank installiert ist, zum Inneren des Tanks bzw. in Richtung Füllgut zeigt. Das Tankinnere ist mit Bezugszeichen 108 bezeichnet. An den Bereich 117 schließt sich das Antennenhorn an (nicht dargestellt in den Figuren 1 bis 10).

Weiterhin weist die Prozesstrennung 101 einen zweiten konischen Bereich 105 auf, welcher bei installierter Antenne in Richtung Hohlleiter 109 bzw. Außenbereich des Behälters zeigt. Zwischen den beiden konischen Bereichen 103, 105 ist ein zylindrischer Bereich 104 vorgesehen, welcher eine Abdichtung (Prozesstrennung) zwischen dem Behälterinneren und dem Behälteräußeren, im Zusammenspiel mit den Backen oder Ringen 110, 111, 112, 116 bereitstellt.

Die Keramik 101, 103, 105 ist insgesamt in den Antennenkörper 106, 107, 113, 114, 115 eingebettet.

Das Element 115 ist ein Hohlleiterteil, in welches die ganzen anderen Teile ein- bzw. angebaut werden. Das Hohlleiterteil 115 bildet mit diesen ganzen Teilen zusammen die HF-Einkopplung.

Das Element 106 dient der Adaption vom Keramikhohlleiter auf das Antennenhorn. Es wird beispielsweise mit dem Hohlleiterteil 115 einteilig ausgeführt. Es kann aber auch zweiteilig ausgeführt sein.

Das Element 110 ist eine Grafitdichtung, welche verpresst wird. Das Element 111 ist ein Vacon-Ring, welcher auf die Keramik aufgelötet ist.

Weiterhin ist ein Verdrehschutz 112 vorgesehen, damit sich die Keramik beim Verpressen nicht mitdreht. Vorliegend ist der Verdrehschutz 112 beispielsweise als sogenannte "Kleeblattscheibe" ausgeführt.

Weiterhin sind eine Druckschraube 113, eine HL-Anpassung 114 vom Keramik- auf den Luft-Hohlleiter und eine Grafitdichtung 116, um spaltfrei auf den Lufthohlleiter überzugehen, vorgesehen.

Weiterhin ist ein Dämpfungselement 102 vorgesehen, welches die Keramik im hinteren konischen Bereich 105 schichtartig umgibt. Bei dieser Variante ist die Keramik im hinteren konischen Bereich (zum Hohlleiter 109 hin) nicht metallisiert.

Das eingesetzte Dämpfungsmaterial kann auch bei Temperaturen im Bereich um 400°C oder höher eingesetzt werden. Herkömmliches Dämpfungsmaterial ist meistens nur bis ca. 200°C einsetzbar, da es z. B. in Epoxidharz oder Silikon eingebunden ist.

In einem Ausführungsbeispiel wird ein Karbon- oder Kohlenstoffgewebe mit der Bezeichnung E-RAM-TCG als Dämpfungsmaterial eingesetzt. Das Dämpfungsmaterial ist beispielsweise als 8 mm dicker Schlauch ausgeführt, der die Keramik (Prozesstrennung) teilweise wie eine Socke oder eine Hülse umgibt. Auch ist die Verwendung eines flachen Gewebes möglich.

Da die Fasern des Karbongewebes nach dem Abschneiden dazu tendieren, sofort auseinander zugehen (Aufspleißen), werden diese vor dem Abschneiden verfestigt. Dies erfolgt beispielsweise mit einem Hochtemperaturkleber. Eine andere Möglichkeit ist die Verwendung von Natronwasserglas (Natriumsilikatlösung). Des weiteren ist es auch möglich, das Karbongewebe in einer Art Käfig aus beispielsweise Metall einzusperren.

Entscheidend für die Funktion der erfindungsgemäßen Antenne ist sind u. a. Lage des Karbonmaterials und die Keramik. Als günstige Stelle für die Anordnung des Dämpfungsmaterials hat sich der hintere konische Bereich 105 plus ggf. ein Teil des zylindrischen Bereichs 104 herausgestellt.

Dadurch lassen sich Dämpfungen des Klingelns um bis zu 40 Dezibel realisieren, während das Nutzecho nur im Bereich um 5 bis 10 Dezibel reduziert wird.

Fig. 2 zeigt eine schematische Querschnittsdarstellung eines Teilbereichs einer Antenne gemäß einem weiteren Ausführungsbeispiel der Erfindung. In diesem Beispiel ummantelt das Dämpfungsmaterial 101 zumindest teilweise den hinteren konischen Bereich 105 des Trennelements und einen Teilbereich des zylindrischen Bereichs 104 der Prozesstrennung.

Im Gegensatz zum Ausführungsbeispiel der Fig. 1 ist kein Dichtring 116 vorgesehen.

Fig. 3 zeigt eine Querschnittsdarstellung eines Teilbereichs eines weiteren Ausführungsbeispiels der Antenne, bei welcher das Dämpfungselement 102 nur einen mittleren Bereich des hinteren konischen Bereichs 105 der Prozesstrennung 101 ummantelt. Weiterhin zeigt Fig. 3 eine Querschnittsdarstellung der Hülse mit zwei Kragen 301, 302.

Es ist zu beachten, dass die Ausführungsbeispiele der vorliegenden Erfindung miteinander kombinierbar sind. Beispielsweise kann der hintere konische Bereich 105 nur teilweise mit Dämpfungsmaterial bestückt (ummantelt, beschichtet) werden. Zusätzlich oder alternativ dazu kann auch der vordere Bereich 103 der Prozesstrennung mit dem Dämpfungsmaterial ummantelt, bestückt oder beschichtet sein, ebenso wie auch der mittlere, zylindrische Bereich 104.

Des weiteren ist auch ein Kragen 301, 302 an einem oder den beiden Enden der Hülse möglich. Dieser Kragen kann die dämpfenden Eigenschaften verbessern und kann beim Fixieren des Teils in der Konstruktion helfen.

Der Kragen 301, 302 befindet sich auf einer oder auch auf beiden Seiten jeweils am Ende der Hülse. An diesem Kragen kann die Hülse eingeklemmt oder untergeklemmt werden, um eine HF-Dichtigkeit herzustellen. Dies kann die HF-Eigenschaften verbessern.

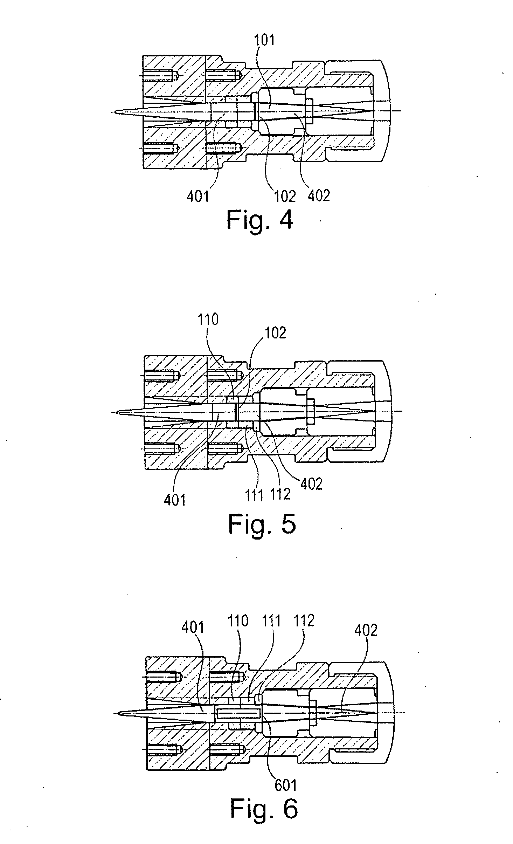

Fig. 4 zeigt eine schematische Querschnittsdarstellung eines Teilbereichs einer Antenne gemäß einem weiteren Ausführungsbeispiel der vorliegenden Erfindung, welche eine zweiteilige Keramik mit einer Ferrit-Scheibe 102 aufweist. Bei diesem Ausführungsbeispiel ist die Keramik in einen vorderen Teil 401 und in einen hinteren Teil 402 aufgeteilt. Zwischen den beiden Keramiken 401, 402 liegt ein magnetischer Absorber 102 (Dämpfungselement), welcher die Dämpfung des Störsignals übernimmt. Realisiert werden kann der Absorber 102 aus z. B. einer dünnen Scheibe aus Ferrit. Hier ist aber besonders darauf zu achten, dass ein Ferritmaterial verwendet wird, welches bei 400°C seine magnetischen Eigenschaften noch möglichst vollständig besitzt. Hierzu eignet sich z. B. Lithium-Titan-Zink-Ferrit, Nickel-Chrom-Zink-Ferrit oder Aluminium-Holmium-Ferrit. Auch andere Materialien mit ferritischen Eigenschaften sind möglich. Eine weitere Möglichkeit ist das Einbringen von Ferritpulver in einen Hochtemperaturkleber oder in Zement.

Fig. 5 zeigt eine schematische Querschnittsdarstellung eines Teilbereichs der Antenne gemäß einem weiteren Ausführungsbeispiel der vorliegenden Erfindung, bei welcher sich die Ferrit-Scheibe 102 nicht wie im Ausführungsbeispiel der Fig. 4 in Höhe des Ringes 112, sondern weiter vorne in Höhe des Rings 110 befindet. Es sind auch andere Positionen der Ferrit-Scheibe möglich, je nachdem, wo sich die Trennstelle zwischen dem ersten Bereich 401 und dem zweiten Bereich 402 der Prozesstrennung befindet.

Fig. 6 zeigt ein weiteres Ausführungsbeispiel der erfindungsgemäßen Antenne, bei welchem eine zweiteilige Keramik 401, 402 verwendet wird, und bei welchem das Dämpfungsmaterial innerhalb des zylindrischen Bereichs der Prozesstrennung eingebracht ist. Bei diesem Ausführungsbeispiel ist eines der Keramikteile 401, 402, oder auch beide, mit einer Bohrung versehen. Diese Bohrung (oder Aussparung) ist mit einem Dämpfungsmaterial 102 gefüllt. Bei entsprechender Bemessung wird der gleiche Effekt erzielt, wie in den anderen Ausführungsbeispielen, nämlich eine Reduzierung des störenden Klingeln.

Der Durchmesser beträgt beispielsweise 2.0 mm, 2.5 mm oder 3.0 mm. Die Länge beträgt zum Beispiel 5 mm oder 10mm. Auch geringere Abmessungen der Bohrungen sind möglich und vorgesehen.

Für dieses Ausführungsbeispiel kann ebenfalls ein temperaturfestes Dämpfungsmaterial, wie z. B. das Karbongewebe mit der Bezeichnung E-RAM-TCG, verwendet werden.

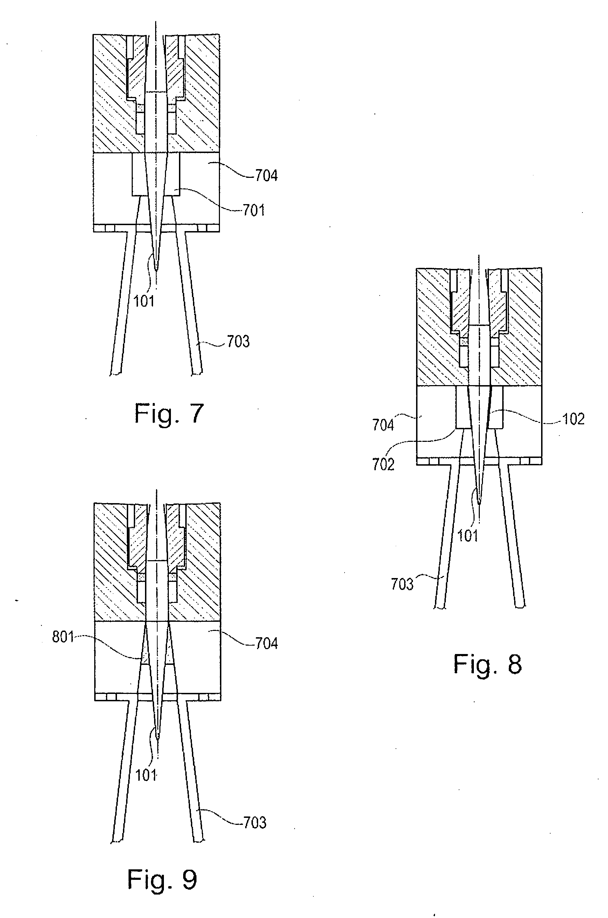

Fig. 7 zeigt ein weiteres Ausführungsbeispiel der erfindungsgemäßen Antenne. Hier wird das störende Klingeln gedämpft, indem in der Schnittstelle zwischen Keramik und Luft auf der Seite des Antennenhorns 703 Dämpfungsmaterial 701 an der Prozesstrennung 101 angeordnet wird. Beispielsweise handelt es sich hierbei um einen Hochtemperatur-Mikrowellen absorbierenden Zement (z. B. C-RAM 325, Fa. Cuming Microwave). Als Dämpfungsmaterial wird beispielsweise das KohlenstoffGewebe E-RAM-TCG eingesetzt, welches im Falle der Fig. 7 mit dem Zement oder aber mit einem Hochtemperaturkleber (z. B. OMEGA BOND 600, Fa. Omega) verfestigt und geschützt werden kann (siehe Fig. 8). Alternativ kann das Material auch kleingeschnitten und direkt in den Hochtemperaturkleber (z. B. OMEGA BOND 600, Fa. Omega) eingerührt werden.

In Fig. 7 ist gezeigt, wie die Prozesstrennung 101 in ihrem vorderen, konischen Bereich zumindest teilweise von dem Zement 701 umgeben ist.

In Fig. 8 ist gezeigt, wie die Prozesstrennung 101 in ihrem vorderen, konischen Bereich vom Dämpfungsmaterial 102 zumindest teilweise umhüllt ist. Das Dämpfungsmaterial 102 ist dann an dem Hochtemperatur-Kleber 702 bzw. von einem Zement 702 verfestigt und geschützt.

Wie in den Fig. 7 und 8 zu erkennen, ragen der Zement 701 (Fig. 7) bzw. der Hochtemperatur-Kleber oder der Zement 702 (Fig. 8) teilweise auch in den Antennenkörper 704 hinein, so dass hierdurch eine zusätzliche Befestigung der Prozesstrennung 101 im Antennenkörper 704 bereitgestellt wird.

In Fig. 9 ist gezeigt, wie der vordere, konische Bereich der Prozesstrennung 101 von dem Hochtemperatur-Kleber mit integriertem Dämpfungsmaterial 801 zumindest teilweise umgeben ist.

Wie in Fig. 9 zu erkennen, kann der Hochtemperatur-Kleber mit dem integrierten Dämpfungsmaterial 801 in den Zwischenraum zwischen den Antennenkörper 704 und der Prozesstrennung 101 eingespritzt werden. Eine extra Aussparung im Antennenkörper 704 ist nicht erforderlich.

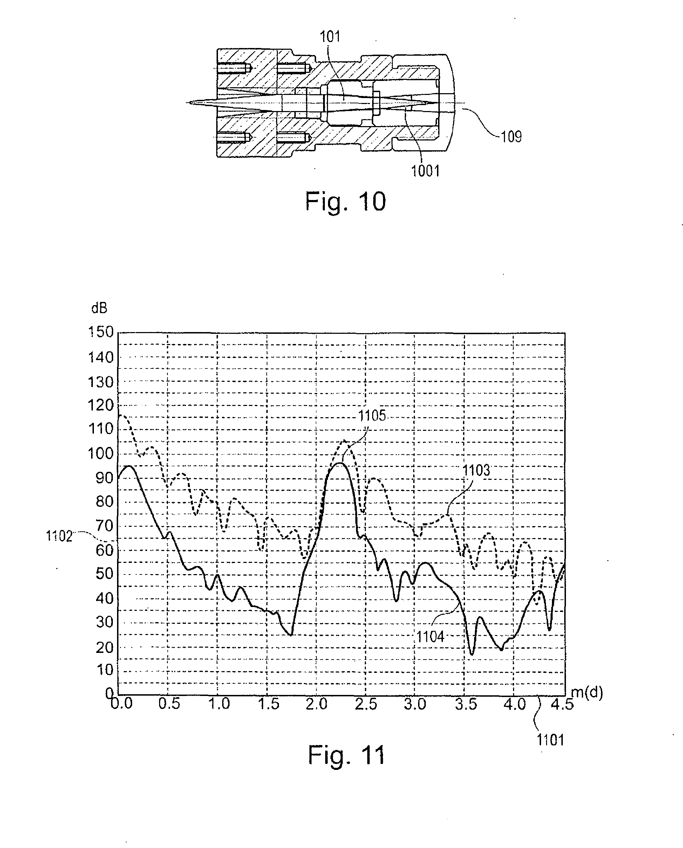

Fig. 10 zeigt eine schematische Querschnittsdarstellung eines Teilbereichs einer Antenne gemäß einem weiteren Ausführungsbeispiel der vorliegenden Erfindung, bei welchem das Dämpfungsmaterial 1001 im hinteren Übergangsbereich zwischen dem Antennenkegel (Keramik) 105 und der Luft bzw. dem Hohlleiter 109 angeordnet ist. Die verwendeten Materialien entsprechen denen in Bezug auf die Fig. 7 bis 9. Beispielsweise kann dämpfender Zement oder Hochtemperatur-Kleber mit Dämpfungsmaterial verwendet werden.

Fig. 11 zeigt zwei Messkurven 1103, 1104. Es handelt sich hierbei um die Hüllkurven zweier Keramikantennensysteme. Die horizontale Achse 1101 entspricht der Länge der Messstrecke (Abstand zwischen Antenne und Füllgutoberfläche) in Metern und reicht von 0 bis 4,5 m. Die vertikale Achse 1102 entspricht der Dämpfung in Dezibel und reicht von 0 bis 150 dB.

Es handelt sich hier um einen Laborversuch. Zur Simulation der Füllgutoberfläche wird die Labordecke verwendet, woraus auch das Echo bei ca. 2,15 m resultiert.

Man kann erkennen, dass die Kurve 1104 von dem Antennensystem mit Dämpfungsmaterial zwar eine etwas gedämpfte Nutzechoamplitude 1105 aufweist (Dämpfung ca. 8 dB), aber auch ein deutlich schneller abfallendes Antennenklingeln im Bereich links vor der Nutzechoamplitude (bis zu 40 dB reduziert). Im Vergleich zur Messkurve 1103, bei der es sich um ein Keramikantennensystem ohne Dämpfung handelt.

Die Messkurven stammen von einer Ausführung wie in Fig. 2. Fig. 1+3 bringen sehr ähnliche Ergebnisse.

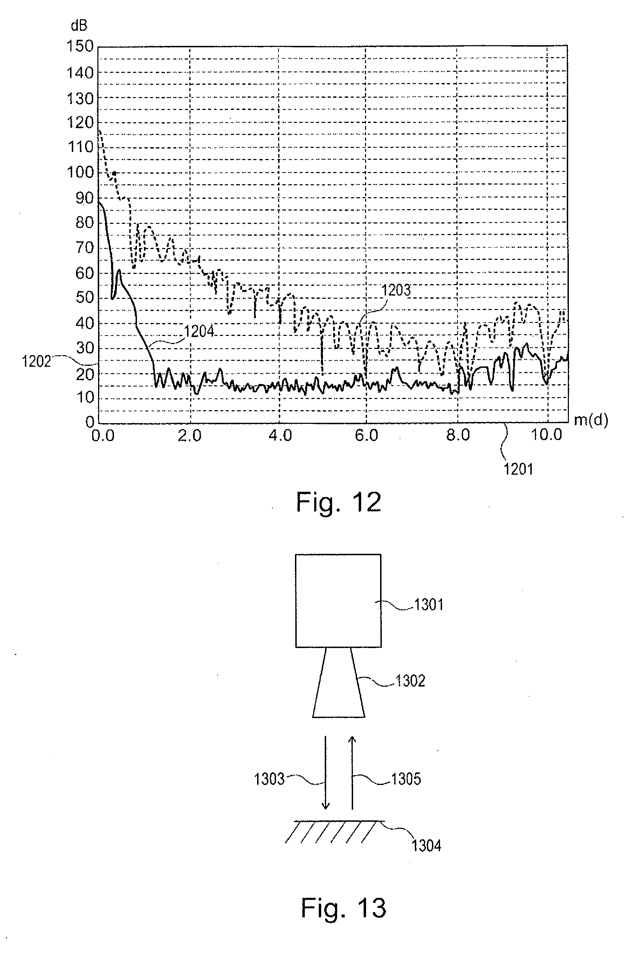

Fig. 12 zeigt zwei weitere Hüllkurven 1203, 1204 zweier Keramikantcnnensysteme. Die Kurve 1203 betrifft eine Hüllkurve für ein Keramikantennensystem ohne Dämpfung. Die Kurve 1204 betrifft ein Keramikantennensystem mit Dämpfung. Die horizontale Achse 1201 zeigt den Abstand zum Füllgut in Metern, und reicht von 0 bis etwa 10 m. Die vertikale Achse 1202 stellt die Dämpfung in Dezibel dar und reicht von 0 bis 150 dB.

Bei der Messung der Fig. 12 wird das Messsignal in den freien Raum gestrahlt, deshalb ist auch kein richtiges Echo zu erkennen.

Man sieht deutlich, dass das Antennenklingeln des Antennensystems mit Dämpfung (Kurve 1204) bereits nach ca. 1,5 m den Rauschpegel erreicht, während das Antennensystem ohne Dämpfungsmaterial (Kurve 1203) dies schätzungsweise erst nach ca. 10 m tun würde.

Fig. 13 zeigt ein Füllstandsradar gemäß einem Ausführungsbeispiel der vorliegenden Erfindung. Das Füllstandsradar weist ein Gehäuse 1301 mit entsprechender Elektronik und einer Antenne 1302 auf. Von der Antenne wird ein Messsignal 1303 in Richtung Füllgutoberfläche 1304 abgestrahlt. Das resultierende, reflektierte Signal 1305 wird von der Antenne 1302 detektiert und von der Messelektronik im Gehäuse 1301 ausgewertet, woraus sich dann der Füllstand ergibt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Antenne für ein Füllstandsradar zum Abstrahlen eines Messsignals und zum Messen eines Füllstands in einem Tank, die Antenne aufweisend:
einen Antennenkörper mit einem Hohlleiterteil (115);
eine Prozesstrennung (101) ausgeführt auf Keramikbasis und zur Bereitstellung einer Abdichtung zwischen einem Behälterinneren und einem Behälteräußeren, für Hochtemperaturanwendungen oder Hochdruckanwendungen;
ein Dämpfungselement (102) zur Verbesserung des Messsignals im Nahbereich der Antenne;
**dadurch gekennzeichnet, daß** entweder das Dämpfungselement (102) an der Prozesstrennung angebracht ist und als zumindest teilweise Ummantelung der Prozesstrennung ausgeführt ist oder die Prozesstrennung einen ersten Bereich (401) und einen vom ersten Bereich abgeteilten zweiten Bereich (402) aufweis und zumindest der erste Bereich mit einer Bohrung (601) versehen ist, in welcher das Dämpfungselement angeordnet ist;
wobei das Dämpfungselement als Dämpfungsmaterial ein Kohlenstoffmaterial aufweist; und
wobei die Prozesstrennung einen konischen Bereich aufweist und in dem Antennenkörper angebracht ist.

2. Antenne nach Anspruch 1,
wobei die Prozesstrennung Aluminiumoxid aufweist.

3. Antenne nach einem der vorhergehenden Ansprüche,
wobei die Prozesstrennung einen zylindrischen Bereich aufweist; und
wobei das Dämpfungselement in dem zylindrischen Bereich der Prozesstrennung angeordnet ist.

4. Antenne nach einem der vorhergehenden Ansprüche,
wobei das Dämpfungselement in dem konischen Bereich angeordnet ist.

5. Antenne nach einem der vorhergehenden Ansprüche,
wobei sich das Dämpfungselement auf der Seite der Antenne, die im eingebauten Zustand zum Tankinneren bzw. in Richtung Füllgut zeigt, befindet.

6. Antenne nach einem der Ansprüche 1 bis 4,
wobei sich ein Teil oder das ganze Dämpfungselement auf der Seite der Antenne befindet, welche im eingebauten Zustand mit einer Strahlungsquelle und einer Elektronik verbunden ist.

7. Antenne nach einem der vorhergehenden Ansprüche,
wobei die Prozesstrennung (101) einen ersten Bereich (401) und einen vom ersten Bereich abgeteilten zweiten Bereich (402) aufweist;
wobei das Dämpfungselement (102) zwischen den beiden Bereichen (401, 402) angeordnet ist.

8. Antenne nach einem der Ansprüche 1 bis 7,
wobei das Kohlenstoffinaterial E-RAM-TCG ist.

9. Antenne nach einem der vorhergehenden Ansprüche,
wobei das Kohlenstoffmaterial durch eine Behandlung mit einem Hochtemperaturklebstoff oder mit einer Natriumsilikatlösung zumindest abschnittsweise verfestigt oder geschützt ist.

10. Antenne nach einem der vorhergehenden Ansprüche,
wobei das Kohlenstoffmaterial durch eine Behandlung mit einem Zement zumindest abschnittsweise verfestigt oder geschützt ist.

11. Antenne nach einem der vorhergehenden Ansprüche,
wobei das Dämpfungselement als Dämpfungsmaterial einen magnetischen Absorber aufweist.

12. Antenne nach Anspruch 11,
wobei der magnetische Absorber als dünne Ferrit-Scheibe ausgeführt ist.

13. Antenne nach einem der Ansprüche 11 oder 12,
wobei der magnetische Absorber zumindest ein Material ausgewählt aus der Gruppe bestehend aus Lithium-Titan-Zink-Ferrit, Nickel-Chrom-Zink-Ferrit oder Aluminium-Holmium-Ferrit aufweist.

14. Antenne nach einem der Ansprüche 11 bis 13,
wobei der magnetische Absorber durch eine Behandlung mit einem Hochtemperaturklebstoff, mit einer Natriumsilikatlösung oder mit Zement zumindest abschnittsweise verfestigt oder geschützt ist.

15. Antenne nach einem der vorhergehenden Ansprüche,
wobei die Antenne zur Anwendung bei Frequenzen von 6,3 Gigahertz oder 26 Gigahertz ausgeführt ist.

16. Antenne nach einem der vorhergehenden Ansprüche,
wobei die Antenne zur Anwendung bei Temperaturen von über 400°C ausgeführt ist.

17. Füllstandsradar mit einer Antenne nach einem der Ansprüche 1 bis 16.

18. Verwendung einer Antenne nach einem der Ansprüche 1 bis 16 zur Füllstandsmessung.

## Claims

1. An antenna for a fill level radar for emitting a measurement signal and for measuring a fill level in a tank, the antenna comprising:
an antenna body with a waveguide element (115);
a process separator (101), based on ceramics and providing a seal between an interior and an exterior of a container, for high-temperature applications or high-pressure applications;
a damping element (102) for improving the measurement signal in the near field of the antenna;
**characterised in that** either the damping element (102) is fitted to the process separator, and is adapted as an at least partial sheathing of the process separator, or the process separator has a first region (401), and a second region (402) divided from the first region, and at least the first region is provided with a bore (601), in which the damping element is arranged, wherein
the damping element has a carbon material as a damping material, and wherein
the process separator has a conical region and is fitted in the antenna body.

2. The antenna according to claim 1, wherein
the process separator comprises aluminium oxide.

3. The antenna according to one of the preceding claims,
wherein
the process separator comprises a cylindrical region, and wherein
the damping element is arranged in the cylindrical region of the process separator.

4. The antenna according to one of the preceding claims, wherein the damping element is arranged in the conical region.

5. The antenna according to one of the preceding claims,
wherein
the damping element is located on the side of the antenna that in the installed state points towards the tank interior or in the direction of the fill material.

6. The antenna according to one of the claims 1 to 4,
wherein
part or all of the damping element is located on the side of the antenna that in the installed state is connected with a radiation source and an electronics assembly.

7. The antenna according to one of the preceding claims,
wherein
the process separator (101) has a first region (401) and a second region (402) divided from the first region, wherein
the damping element (102) is arranged between the two regions (401, 402).

8. The antenna according to one of the claims 1 to 7,
wherein
the carbon material is E-RAM-TCG.

9. The antenna according to one of the preceding claims,
wherein
the carbon material is at least in some sections strengthened or protected by means of a treatment with a high-temperature adhesive or a sodium silicate solution.

10. The antenna according to one of the preceding claims,
wherein
the carbon material is at least in some sections strengthened or protected by means of a treatment with a cement.

11. The antenna according to one of the preceding claims,
wherein
the damping element has a magnetic absorber as a damping material.

12. The antenna according to claim 11, wherein
the magnetic absorber is adapted as a thin ferrite disk.

13. The antenna according to one of the claims 11 or 12,
wherein
the magnetic absorber comprises at least one material selected from the group consisting of lithium-titanium-zinc-ferrite, nickel-chromium-zinc-ferrite, or aluminium-holmium-ferrite.

14. The antenna according to one of the claims 11 to 13,
wherein
the magnetic absorber is at least in some sections strengthened or protected by means of a treatment with a high-temperature adhesive, a sodium silicate solution, or a cement.

15. The antenna according to one of the preceding claims,
wherein
the antenna is adapted for use at frequencies of 6,3 gigahertz or 26 gigahertz.

16. The antenna according to one of the preceding claims,
wherein
the antenna is adapted for use at temperatures of above 400°C.

17. A fill level radar with an antenna according to one of the claims 1 to 16.

18. The use of an antenna according to one of the claims 1 to 16 for fill level measurement.

## Revendications

1. Antenne pour un radar de niveau destinée à l'émission d'un signal de mesure et à la mesure d'un niveau dans un réservoir, l'antenne présentant :
un corps d'antenne avec un guide d'ondes (115) ;
une séparation de processus (101), réalisée à base de céramique et destinée à fournir une étanchéité entre un intérieur de réservoir et un extérieur de réservoir, pour des applications à hautes températures ou sous hautes pressions ;
un élément d'amortissement (102) pour l'amélioration du signal de mesure dans la zone proche de l'antenne ;
**caractérisée en ce que**, soit l'élément d'amortissement (102) est placé sur la séparation de processus et est réalisé sous forme de gainage, au moins partiel, de la séparation de processus, soit la séparation de processus présente une première zone (401) et une seconde zone (402) séparée de la première zone, et
au moins la première zone est munie d'un alésage (601), dans lequel est disposé l'élément d'amortissement ; l'élément d'amortissement présentant un matériau à base de carbone en tant que matériau d'amortissement ; et
la séparation de processus présentant une zone conique et étant placée dans le corps d'antenne.

2. Antenne suivant la revendication 1, dans laquelle la séparation de processus présente de l'oxyde d'aluminium.

3. Antenne suivant l'une des revendications précédentes, dans laquelle la séparation de processus présente une zone cylindrique ; et dans laquelle l'élément d'amortissement est disposé dans la zone cylindrique de la séparation de processus.

4. Antenne suivant l'une des revendications précédentes, dans laquelle l'élément d'amortissement est disposé dans la zone conique.

5. Antenne suivant l'une des revendications précédentes, dans laquelle l'élément d'amortissement se situe sur le côté de l'antenne, orienté dans l'état de montage vers l'intérieur du réservoir et/ou en direction de la charge.

6. Antenne suivant l'une des revendications 1 à 4, dans laquelle une partie ou la totalité de l'élément d'amortissement se situe sur le côté de l'antenne, relié dans l'état de montage à une source de rayonnement et à une électronique.

7. Antenne suivant l'une des revendications précédentes, dans laquelle
la séparation de processus (101) présente une première zone (401) et une seconde zone (402) séparée de la première zone ;
l'élément d'amortissement (102) est disposé entre les deux zones (401, 402).

8. Antenne suivant l'une des revendications 1 à 7, dans laquelle le matériau à base de carbone est de l'E-RAM-TCG.

9. Antenne suivant l'une des revendications précédentes, dans laquelle le matériau à base de carbone est consolidé ou protégé, au moins par sections, par un traitement avec une colle résistante aux hautes températures ou avec une solution de silicate de sodium.

10. Antenne suivant l'une des revendications précédentes, dans laquelle le matériau à base de carbone est consolidé ou protégé, au moins par sections, par un traitement avec un ciment.

11. Antenne suivant l'une des revendications précédentes, dans laquelle l'élément d'amortissement présente un absorbeur magnétique en tant que matériau d'amortissement.

12. Antenne suivant la revendication 11, dans laquelle l'absorbeur magnétique est réalisé sous forme de mince rondelle de ferrite.

13. Antenne suivant l'une des revendications 11 et 12, dans laquelle l'absorbeur magnétique présente au moins un matériau sélectionné parmi le groupe constitué de lithium - titane - zinc - ferrite, nickel - chrome - zinc - ferrite ou aluminium - holmium - ferrite.

14. Antenne suivant l'une des revendications 11 à 13, dans laquelle l'absorbeur magnétique est consolidé ou protégé, au moins par sections, par un traitement avec une colle résistante aux hautes températures, avec une solution de silicate de sodium ou avec un ciment.

15. Antenne suivant l'une des revendications précédentes, dans laquelle l'antenne est réalisée pour des applications à des fréquences de 6,3 gigahertz ou de 26 gigahertz.

16. Antenne suivant l'une des revendications précédentes, dans laquelle l'antenne est réalisée pour des applications à des températures de plus de 400°C.

17. Radar de niveau avec une antenne suivant l'une des revendications 1 à 16.

18. Utilisation d'une antenne suivant l'une des revendications 1 à 16 pour la mesure de niveau.
